(19) Europäisches Patentamt
European Patent Office
Office européen des brevets

(11) **EP 4 235 127 B1**

(12) **FASCICULE DE BREVET EUROPEEN**

(45) Date de publication et mention
de la délivrance du brevet:
**05.11.2025 Bulletin 2025/45**

(21) Numéro de dépôt: **23157469.0**

(22) Date de dépôt: **20.02.2023**

(51) Classification Internationale des Brevets (IPC):
**G01L 3/10** *(2006.01)*  **G01D 5/244** *(2006.01)*
**G01L 5/22** *(2006.01)*

(52) Classification Coopérative des Brevets (CPC):
**G01L 3/104; G01L 3/109; G01L 5/221;**
G01D 5/24428; G01D 5/24442

(54) **SYSTÈME DE DÉTERMINATION D'UN COUPLE**

SYSTEM ZUR BESTIMMUNG EINES DREHMOMENTS

SYSTEM FOR DETERMINING A TORQUE

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **25.02.2022 FR 2201676**

(43) Date de publication de la demande:
**30.08.2023 Bulletin 2023/35**

(73) Titulaire: **NTN Europe
74000 Annecy (FR)**

(72) Inventeurs:
• **DURET, Christophe
74290 Bluffy (FR)**
• **FLAMMIER, Cécile
74000 Annecy-Le-Vieux (FR)**

(74) Mandataire: **Sayettat, Julien Christian
Strato-IP
63, Boulevard de Ménilmontant
75011 Paris (FR)**

(56) Documents cités:
**EP-A1- 1 452 834     FR-A1- 2 930 637
US-A- 5 172 057     US-A- 5 325 056**

**Description**

L'invention concerne un système de détermination d'un couple et un procédé de réalisation d'un codeur pour un tel système.

L'invention s'applique en particulier à la détermination d'un couple appliqué entre deux organes tournants autour d'un axe géométrique de rotation, notamment deux organes intégrés dans une transmission d'un couple moteur à un véhicule, par exemple entre le moteur électrique et la transmission mécanique d'un vélo à assistance électrique.

Pour ce faire, il est connu d'utiliser un corps d'épreuve présentant une bague intérieure solidaire en rotation de moyens de montage dudit corps d'épreuve sur un organe, et une bague extérieure s'étendant autour de la bague intérieure en présentant des moyens de montage dudit corps d'épreuve sur l'autre organe, lesdites bagues étant reliées par une structure déformable qui est agencée pour transmettre le couple entre les organes tout en autorisant un débattement angulaire entre lesdites bagues en fonction du couple appliqué entre les organes.

Un tel corps d'épreuve peut être instrumenté avec un codeur en équipant chacune des bagues d'un anneau portant une piste magnétique respectivement intérieure et extérieure qui est apte à émettre un signal périodique représentatif du déplacement en rotation de la bague correspondante. En particulier, chacune des pistes présente une succession de paires de pôles Nord et Sud pour former une piste magnétique multipolaire délivrant un signal magnétique pseudo-sinusoïdal.

Le système de détermination comprend alors un capteur présentant un premier - respectivement un deuxième - motif d'éléments sensibles disposé à distance de lecture de la piste intérieure - respectivement de la piste extérieure - pour former un signal représentatif de la position angulaire de l'anneau correspondant.

Le document FR-2 821 931 décrit l'utilisation d'un dispositif de comparaison de tels signaux qui est apte à déterminer un angle de déplacement relatif des bagues, et donc le couple appliqué en ce qu'il induit ledit angle par torsion des bagues.

La limite de cette solution réside dans la précision de la détermination du couple, notamment en relation avec des corps d'épreuve très rigides pour éviter de ressentir l'angle de torsion dans la transmission.

En particulier, les pistes magnétiques multipolaires ne délivrent pas un signal parfaitement sinusoïdal, notamment en fonction de la distance de lecture entre les motifs d'éléments sensibles et ladite piste, ce qui peut provoquer une erreur lors de la comparaison des signaux de position pour déterminer l'angle qui est fonction du couple appliqué. Le document FR 2851651 B1 (SKF AB [SE]) 17 July 2005 (2005-07-17) décrit un exemple de dispositif de codage de paramètre de rotation qui comprend un organe codeur multipistes.

Le document

FR 2930 637 A1 (SNR ROULEMENTS SA [FR]; NTN TOYO BEARING CO LTD [JP]) 30 octobre 2009 (2009-10-30) décrit un exemple d'un système de détermination de position angulaire sur un organe tournant.

L'invention a pour but de résoudre les problèmes de l'art antérieur en proposant notamment un système de détermination d'un couple appliqué dont les défauts de sinusoïdalité des signaux magnétiques délivrés n'affectent pas la précision de la détermination.

A cet effet, selon un premier aspect, l'invention propose un système de détermination d'un couple appliqué entre deux organes tournants autour d'un axe géométrique de rotation, ledit système comprenant :

- un corps d'épreuve présentant une bague intérieure solidaire en rotation de moyens de montage dudit corps d'épreuve sur un organe, et une bague extérieure s'étendant autour de la bague intérieure en présentant des moyens de montage dudit corps d'épreuve sur l'autre organe, lesdites bagues étant reliées par une structure déformable qui est agencée pour transmettre le couple entre les organes tout en autorisant un débattement angulaire entre lesdites bagues en fonction du couple appliqué entre les organes ;

- un codeur réalisé en équipant chacune desdites bagues d'un anneau portant une piste magnétique respectivement intérieure et extérieure qui est apte à émettre un signal périodique représentatif du déplacement en rotation de la bague correspondante, chacune desdites pistes présentant une succession de paires de pôles Nord et Sud de largeur polaire respectivement $Lp_i$ et $Lp_e$ pour former une piste magnétique multipolaire ;

- un capteur comprenant un premier - respectivement un deuxième - motif d'éléments sensibles disposé à distance de lecture $e_i$ - respectivement $e_e$ - de la piste intérieure - respectivement de la piste extérieure - pour former un signal représentatif de la position angulaire de l'anneau correspondant ;

- un dispositif de comparaison des signaux délivrés par le capteur, ledit dispositif étant apte à déterminer un angle entre les bagues qui est fonction du couple appliqué ;

les pistes présentent un nombre de paires de pôles identique qui sont alignés radialement, les distances de lecture $e_e$ et $e_i$ entre les motifs d'éléments sensibles et les pistes étant telles que : $\dfrac{e_e}{Lp_e} = \dfrac{e_i}{Lp_i}$

Selon un deuxième aspect, l'invention propose un procédé de réalisation d'un codeur pour un système de détermination selon le premier aspect, prévoyant de :

- fixer les anneaux sur les bagues d'un corps d'épreuve présentant une bague intérieure solidaire en rotation de moyens de montage dudit corps d'épreuve sur un organe, et une bague extérieure s'étendant autour de la bague intérieure en présentant des moyens de montage dudit corps d'épreuve sur l'autre organe, lesdites bagues étant reliées par une structure déformable qui est agencée pour transmettre le couple entre les organes tout en autorisant un débattement angulaire entre lesdites bagues en fonction du couple appliqué entre les organes ; puis
- aimanter chacune des pistes magnétiques de façon concentrique pour qu'elles présentent un axe de révolution commun.

D'autres objets et avantages de l'invention apparaîtront dans la description qui suit, faite en référence aux figures annexées, dans lesquelles :

- la figure 1 est une représentation de face d'un corps d'épreuve d'un système de détermination selon l'invention ;
- la figure 2 est une vue en coupe transversale du corps d'épreuve de la figure 1 montrant la disposition du capteur selon une réalisation de l'invention, la figure 2a étant une vue agrandie de la figure 2 ;
- la figure 2b est une vue analogue à la figure 2a montrant une autre disposition du capteur par rapport à un corps d'épreuve selon l'invention.

En relation avec ces figures, on décrit ci-dessous un système de détermination d'un couple appliqué entre deux organes tournants autour d'un axe géométrique de rotation R.

En particulier, le système permet la détermination d'un couple appliqué entre deux organes intégrés dans une transmission d'un couple moteur à un véhicule, par exemple entre le moteur électrique et la transmission mécanique d'un vélo à assistance électrique.

Le système comprend un corps d'épreuve présentant une bague intérieure 1 solidaire en rotation de moyens de montage dudit corps d'épreuve sur un organe, et une bague extérieure 2 s'étendant autour de la bague intérieure 1 en présentant des moyens de montage dudit corps d'épreuve sur l'autre organe.

Les bagues 1, 2 sont reliées par une structure déformable qui est agencée pour transmettre le couple entre les organes tout en autorisant un débattement angulaire entre lesdites bagues en fonction du couple appliqué entre lesdits organes.

Dans le mode de réalisation représenté, les bagues 1, 2 sont concentriques autour d'un manchon de montage 3 sur l'axe géométrique de rotation R, par exemple un arbre de transmission du couple à un autre arbre sur lequel la bague extérieure 2 est montée, la structure déformable comprenant au moins un bras radial 4 - quatre équirépartis angulairement sur les figures - qui relie les bagues 1, 2.

Ainsi, le couple transmis entre les arbres induit une torsion des bagues 1, 2 et donc un déplacement angulaire relatif desdites bagues suivant un angle de torsion qui est fonction dudit couple, le système déterminant ledit couple sur la base de la mesure dudit angle de torsion.

Pour ce faire, un codeur est réalisé avec le corps d'épreuve en équipant chacune des bagues 1, 2 avec un anneau respectivement intérieur 5 et extérieur 6 portant une piste magnétique respectivement intérieure 7 et extérieure 8 qui est apte à émettre un signal périodique représentatif du déplacement dudit anneau en rotation, le système comprenant un capteur de mesure de la position angulaire de chacun desdits anneaux.

En particulier, une succession de paires de pôles 9 Nord et Sud est aimantée sur respectivement un anneau 5, 6 pour former une piste magnétique multipolaire 7, 8 apte à émettre un signal magnétique de forme pseudo-sinusoïdale. Les pistes intérieure 7 et extérieure 8 présentent des pôles 9 qui ont une largeur polaire respectivement $Lp_i$ et $Lp_e$ qui sont agencées pour que lesdites pistes présentent un nombre de paires de pôles 9 identique qui sont alignés radialement pour délivrer des signaux magnétiques en phase.

Par exemple, si l'anneau extérieur 6 a un diamètre double de l'anneau intérieur 5, la largeur polaire $Lp_e$ des pôles 9 dudit anneau extérieur sera double de la largeur $Lp_i$.

Les anneaux 5, 6 peuvent comprendre une matrice annulaire, par exemple réalisée à base d'un matériau plastique ou élastomère, dans laquelle sont dispersées des particules magnétiques, notamment des particules de ferrite ou de terres rares comme le NdFeB, lesdites particules étant aimantées pour former les pistes magnétiques 7, 8.

Le capteur comprend un premier 20 - respectivement un deuxième 21 - motif d'éléments sensibles disposé à distance de lecture $e_i$ - respectivement $e_e$ - de la piste intérieure 7 - respectivement de la piste extérieure 8 - pour former un signal représentatif de la position angulaire de l'anneau 5, 6 correspondant.

En particulier, chaque motif 20, 21 peut comprendre au moins deux éléments sensibles, notamment une pluralité d'éléments sensibles alignés tel que décrit dans les documents FR-2 792 403, EP-2 602 593 et EP-2 602 594.

Les éléments sensibles peuvent être à base d'un matériau magnétorésistif dont la résistance varie en fonction du signal magnétique de la piste 7, 8 à détecter, par exemple de type AMR, TMR ou GMR, ou d'une sonde à effet Hall.

Selon une réalisation, la position angulaire peut être déterminée de façon incrémentale au moyen du signal émis par une piste magnétique 7, 8. Selon une autre réalisation, la position angulaire peut être déterminée de façon absolue, c'est-à-dire par rapport à une position de référence, en prévoyant une piste magnétique secondaire ou un codage spécifique sur l'anneau 5, 6.

Le système comprend en outre un dispositif de comparaison des signaux délivrés par le capteur, ledit dispositif étant apte à déterminer un angle entre les bagues 1, 2 qui est fonction du couple appliqué. En relation avec les figures, le capteur comprend une carte 23 sur laquelle les motifs 20, 21 d'éléments sensibles sont implantés dans un circuit électronique.

Selon une réalisation, les capteurs délivrent des signaux carrés incrémentaux en quadrature, le dispositif de comparaison comprenant des moyens de comptage indiquant la position angulaire de chacun des anneaux 5, 6 et des moyens de soustraction permettant de calculer la différence entre lesdites positions angulaires.

En particulier, le capteur peut comprendre des moyens d'application d'un facteur d'interpolation $f_i$ et $f_e$ au signal délivré par respectivement le premier et le deuxième motif d'éléments sensibles, les moyens de comptage mesurant un nombre de fronts $n_i$ et $n_e$ dans chacun desdits signaux interpolés, les moyens de soustraction effectuant par exemple l'opération $f_e.n_i - n_e.f_i$ pour calculer la différence entre les positions angulaires des anneaux 5, 6.

Lorsque les facteurs d'interpolation sont identique ($f_i = f_e$), le calcul peut être réalisé par simple soustraction des fronts $n_i$ et $n_e$.

Les distances de lecture $e_e$ et $e_i$ entre les motifs 20, 21 d'éléments sensibles et les pistes 7, 8 sont telles que : $\frac{e_e}{Lp_e} = \frac{e_i}{Lp_i}$ de sorte à compenser les erreurs de sinusoïdalité des signaux magnétiques lus par lesdits motifs.

Par ailleurs, pour diminuer l'erreur due à la mauvaise sinusoïdalité du champ magnétique, les distances de lecture $e_e$ et $e_i$ peuvent être respectivement égales à $Lp_e/2$ et à $Lp_i/2$ +/-10%. De part et d'autre de cette position optimale, la forme du champ magnétique en fonction de la distance de lecture se dégrade. A faible distance de lecture, la forme du signal devient plus « carrée », à forte distance de lecture plus « triangulaire ».

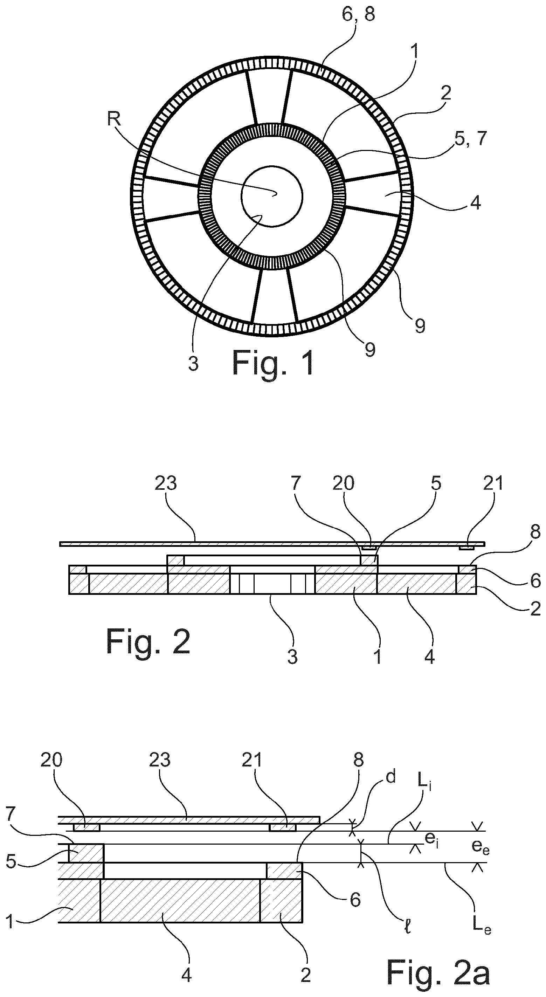

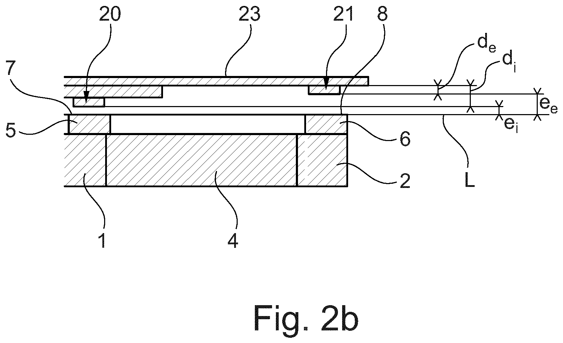

En relation avec la figure 2b, la relation $\frac{e_e}{Lp_e} = \frac{e_i}{Lp_i}$ est satisfaite en prévoyant que chacun des motifs 20, 21 soit saillant axialement de la carte 23 suivant une distance $d_e$ pour le motif extérieur 21 et $d_i$ pour le motif intérieur 20, les distances $d_e$ et $d_i$ étant différentes et les anneaux 5, 6 étant fixés sur les bagues 1, 2 de sorte que leurs pistes 7, 8 soient disposées dans un plan L.

Cette réalisation peut être mise en œuvre par un calage en hauteur des capteurs ou en réalisant un circuit imprimé comportant plusieurs niveaux (figure 2b). Par ailleurs, une déformation d'un circuit imprimé s'il est assez fin et flexible, peut permettre également de satisfaire la relation $\frac{e_e}{Lp_e} = \frac{e_i}{Lp_i}$.

En relation avec la figure 2a, les anneaux 5, 6 sont fixés sur les bagues 1, 2 de sorte que leurs pistes 7, 8 soient disposées dans un plan respectivement $L_i$ et $L_e$ qui sont espacés axialement d'une distance l pour satisfaire la relation $\frac{e_e}{Lp_e} = \frac{e_i}{Lp_i}$, les motifs 20, 21 étant implantés sur la carte 23 en saillant d'une même distance d.

Selon une réalisation, la relation $\frac{e_e}{Lp_e} = \frac{e_i}{Lp_i}$ peut être satisfaite en combinant des distances $d_e$ et $d_i$ différentes avec une distance l non nulle.

Le codeur décrit ci-dessus peut être réalisé en fixant d'abord les anneaux 5, 6 sur les bagues 1, 2 puis en aimantant chacune des pistes magnétiques 7, 8 de façon concentrique pour qu'elles présentent un axe de révolution commun.

De façon avantageuse, le procédé prévoit de fixer de façon concentrique les anneaux 5, 6 sur les bagues 1, 2 pour qu'ils présentent un axe de révolution commun avec l'axe géométrique de rotation R.

La fixation préalable permet que les anneaux 5, 6 présentent la même excentration mécanique qui est induite par une éventuelle distance entre leur centre et l'axe géométrique de rotation R, et l'aimantation ultérieure des pistes permet d'obtenir une même excentration magnétique entre leur axe de révolution commun et l'axe géométrique de rotation R.

Ainsi, les excentrations étant les mêmes, leurs éventuels défauts n'affectent pas la précision de la détermination d'un couple par comparaison de la position angulaire de chacun des anneaux 5, 6, dans la mesure où l'erreur de position sera alors la même et pourra donc être éliminée par soustraction.

Selon un mode de réalisation, les pistes 7, 8 sont aimantées au moyen d'un outil qui présente deux couronnes d'aimantation de respectivement un anneau 5, 6 fixé sur le corps, les couronnes pouvant présenter avantageusement une géométrie analogue à la géométrie de respectivement un anneau 5, 6.

Cette réalisation permet de pouvoir aimanter les pistes 7, 8 simultanément en respectant de façon simple leur concentricité dans la mesure où elle est imposée par la géométrie des couronnes d'aimantation, ainsi que le même nombre de paires de pôles 9 alignés radialement sur les pistes 7, 8.

**Revendications**

1. Système de détermination d'un couple appliqué entre deux organes tournants autour d'un axe géométrique de rotation (R), ledit système comprenant :

   - un corps d'épreuve présentant une bague intérieure (1) solidaire en rotation de moyens de montage dudit corps d'épreuve sur un organe, et une bague extérieure (2) s'étendant autour de la bague intérieure (1) en présentant des moyens de montage dudit corps d'épreuve sur l'autre organe, lesdites bagues étant reliées par une structure déformable qui est agencée pour transmettre le couple entre les organes tout en autorisant un débattement angulaire entre lesdites bagues en fonction du couple appliqué entre les organes,
- un codeur réalisé en équipant chacune desdites bagues d'un anneau (5, 6) portant une piste magnétique respectivement intérieure (7) et extérieure (8) qui est apte à émettre un signal périodique représentatif du déplacement en rotation de la bague (1, 2) correspondante, chacune desdites pistes présentant une succession de paires de pôles (9) Nord et Sud de largeur polaire respectivement $Lp_i$ et $Lp_e$ pour former une piste magnétique multipolaire (7, 8) ;
- un capteur comprenant un premier (20) - respectivement un deuxième (21) - motif d'éléments sensibles disposé à distance de lecture $e_i$ - respectivement $e_e$ - de la piste intérieure (7) - respectivement de la piste extérieure (8) - pour former un signal représentatif de la position angulaire de l'anneau (5, 6) correspondant ;
- un dispositif de comparaison des signaux délivrés par le capteur, ledit dispositif étant apte à déterminer un angle entre les bagues (1, 2) qui est fonction du couple appliqué,

ledit système étant **caractérisé en ce que** les pistes (7, 8) présentent un nombre de paires de pôles (9) identique qui sont alignés radialement, les distances de lecture $e_e$ et $e_i$ entre les motifs (20, 21) d'éléments sensibles et les pistes (7, 8) étant telles que :

$$\frac{e_e}{Lp_e} = \frac{e_i}{Lp_i}.$$

2. Système de détermination selon la revendication 1, **caractérisé en ce que** le capteur délivre des signaux carrés incrémentaux en quadrature, le dispositif de comparaison comprenant des moyens de comptage indiquant la position angulaire de chacun des anneaux (5, 6) et des moyens de soustraction permettant de calculer la différence entre lesdites positions angulaires.

3. Système de détermination selon la revendication 2, **caractérisé en ce que** le capteur comprenant des moyens d'application d'un facteur d'interpolation $f_i$ et $f_e$ au signal délivré par respectivement le premier (20) et le deuxième (21) motif d'éléments sensibles, les moyens de comptage mesurant un nombre de fronts $n_i$ et $n_e$ dans chacun desdits signaux interpolés, les moyens de soustraction effectuant l'opération $f_e.n_i - n_e.f_i$ pour calculer la différence entre les positions angulaires des anneaux (5, 6).

4. Système de détermination selon l'une quelconque des revendications 1 à 3, **caractérisé en ce que** les distances de lecture $e_e$ et $e_i$ sont respectivement égales à $Lp_e/2$ +/-10% et à $Lp_i/2$ +/-10%.

5. Système de détermination selon l'une quelconque des revendications 1 à 4, **caractérisé en ce que** le capteur comprend une carte (23) sur laquelle les motifs (20, 21) d'éléments sensibles sont implantés dans un circuit électronique, chacun desdits motifs saillant radialement de ladite carte suivant une distance $d_i$ pour le premier motif (20) et $d_e$ pour le deuxième motif (21).

6. Système de détermination selon l'une quelconque des revendications 1 à 5, **caractérisé en ce que** les anneaux (5, 6) sont fixés sur les bagues (1, 2) de sorte que leurs pistes (7, 8) soient disposées dans un plan respectivement $L_i$ et $L_e$ qui sont espacés radialement d'une distance l.

7. Système de détermination selon l'une quelconque des revendications 1 à 6, **caractérisé en ce que** la structure déformable comprend au moins un bras radial (4) qui relie les bagues (1, 2).

8. Procédé de réalisation d'un codeur pour un système de détermination d'un couple appliqué entre deux organes tournants autour d'un axe géométrique de rotation (R) selon l'une quelconque des revendications 1 à 7, **caractérisé en ce qu'**il prévoit de :

- fixer les anneaux (5, 6) sur les bagues (1, 2) d'un corps d'épreuve présentant une bague intérieure (1) solidaire en rotation de moyens de montage dudit corps d'épreuve sur un organe, et une bague extérieure (2) s'étendant autour de la bague intérieure (1) en présentant des moyens de montage dudit corps d'épreuve sur l'autre organe, lesdites bagues étant reliées par une structure déformable qui est agencée pour transmettre le couple entre les organes tout en autorisant un débattement angulaire entre lesdites bagues en fonction du couple appliqué entre les organes ; puis
- aimanter chacune des pistes magnétiques (7, 8) de façon concentrique pour qu'elles présentent un axe de révolution commun.

9. Procédé de réalisation d'un codeur selon la revendication 8, **caractérisé en ce que** les pistes (7, 8) sont aimantées simultanément.

**Patentansprüche**

1. System zur Bestimmung eines Drehmoments, das zwischen zwei um eine geometrische Drehachse (R) drehenden Glieder angewandt wird, das System umfassend:

- einen Prüfling, der einen inneren Schleifring (1) aufweist, der drehfest mit Einrichtungen zur Montage des Prüflings an einem Glied verbunden ist, und einen äußeren Schleifring (2), der sich um den inneren Schleifring (1) erstreckt und dabei Einrichtungen zur Montage des Prüflings an dem anderen Glied aufweist, wobei die Schleifringe durch eine verformbare Struktur verbunden sind, die angeordnet ist, um das Drehmoment zwischen den Gliedern zu übertragen, während sie eine Winkelauslenkung zwischen den Schleifringen abhängig von dem zwischen den Gliedern angewandten Drehmoment zulässt,

- einen Kodierer, der realisiert wird, indem jeder der Schleifringe mit einem Ring (5, 6) ausgestattet wird, der eine jeweils innere (7) und äußere (8) Magnetbahn trägt, die geeignet ist, um ein periodisches Signal zu emittieren, das repräsentativ für die Drehbewegung des entsprechenden Schleifrings (1, 2) ist, wobei jede der Bahnen eine Abfolge von Nord- und Südpolpaaren (9) mit einer jeweiligen Polbreite $Lp_i$ und $Lp_e$ aufweist, um eine multipolare Magnetbahn (7, 8) zu bilden;

- einen Geber, umfassend jeweils ein erstes (20) und ein zweites (21) Muster von Sensorelementen, die jeweils in Leseabstand $e_i$ - und $e_e$- von jeweils der inneren Bahn (7) und der äußeren Bahn (8) angebracht sind, um ein Signal zu bilden, das repräsentativ für die Winkelposition des entsprechenden Rings (5, 6) ist;

- eine Vergleichsvorrichtung der Signale, die von dem Geber bereitgestellt werden, wobei die Vorrichtung geeignet ist, um einen Winkel zwischen den Schleifringen (1, 2) zu bestimmen, der von dem Drehmoment abhängig ist,

wobei das System **dadurch gekennzeichnet ist, dass** die Bahnen (7, 8) eine identische Anzahl von Polpaaren (9) aufweisen, die radial ausgerichtet sind, wobei die Leseabstände $e_e$ und $e_i$ zwischen den Mustern (20, 21) von Sensorelementen und den Bahnen (7, 8) derart sind, dass: $\dfrac{e_e}{Lp_e} = \dfrac{e_i}{Lp_i}$.

2. System zur Bestimmung nach Anspruch 1, **dadurch gekennzeichnet, dass** der Geber quadratische inkrementale Quadratursignale bereitstellt, die Vergleichsvorrichtung umfassend Zähleinrichtungen, die die Winkelposition von jedem der Ringe (5, 6) angibt, und Subtraktionseinrichtungen zum Berechnen der Differenz zwischen den Winkelpositionen.

3. System zur Bestimmung nach Anspruch 2, **dadurch gekennzeichnet, dass** der Sensor Einrichtungen zum Anwenden eines Interpolationsfaktors $f_i$ und $f_e$ auf das jeweils von dem ersten (20) und dem zweiten (21) Muster von Sensorelementen bereitgestellte Signal umfasst, wobei die Zähleinrichtungen eine Anzahl von Flanken $n_i$ und $n_e$ in jedem der interpolierten Signale messen, die Subtraktionseinrichtungen die Operation $f_e.n_i - n_e.f_i$ durchführt, um die Differenz zwischen den Winkelpositionen der Ringe (5, 6) zu berechnen.

4. System zur Bestimmung nach einem der Ansprüche 1 bis 3, **dadurch gekennzeichnet, dass** die Leseabstände $e_e$ und $e_i$ jeweils $Lp_e/2$ +/-10 % und $Lp_i/2$ +/-10 % sind.

5. System zur Bestimmung nach einem der Ansprüche 1 bis 4, **dadurch gekennzeichnet, dass** der Sensor eine Platine (23) umfasst, auf der die Muster (20, 21) von Sensorelementen in eine elektronische Schaltung implantiert sind, wobei jedes der Muster in einem Abstand $d_i$ für das erste Muster (20) und $d_e$ für das zweite Muster (21) radial von der Karte hervorsteht.

6. System zur Bestimmung nach einem der Ansprüche 1 bis 5, **dadurch gekennzeichnet, dass** die Ringe (5, 6) an den Schleifringen (1, 2) befestigt sind, sodass ihre Bahnen (7, 8) jeweils in einer Ebene $L_i$ und $L_e$ angebracht sind, die radial um einen Abstand I beabstandet sind.

7. System zur Bestimmung nach einem der Ansprüche 1 bis 6, **dadurch gekennzeichnet, dass** die verformbare Struktur mindestens einen radialen Arm (4) umfasst, der die Schleifringe (1, 2) verbindet.

8. Verfahren zur Herstellung eines Kodierers für ein System zur Bestimmung eines zwischen zwei um eine geometrische Drehachse (R) drehenden Gliedern angewandten Drehmoments nach einem der Ansprüche 1 bis 7, **dadurch gekennzeichnet, dass** es Folgendes vorsieht:

- Befestigen der Ringe (5, 6) an den Schleifringen (1, 2) eines Prüflings, der einen inneren Schleifring (1), der drehfest mit Einrichtungen zur Montage des Prüflings an einem Glied verbunden ist, und einen äußeren Schleifring (2), der sich um den inneren Schleifring (1) erstreckt und dabei Einrichtungen zur Montage des Prüflings an dem anderen Glied aufweist, aufweist, wobei die Schleifringe durch eine verformbare Struktur verbunden sind, die angeordnet ist, um das Drehmoment zwischen den Gliedern zu übertragen, während sie eine Winkelauslenkung zwischen den Schleifringen abhängig von dem zwischen den Gliedern angewandten Drehmoment zulässt; dann

- Magnetisieren jeder der Magnetbahnen (7, 8) auf konzentrische Weise, damit sie eine gemeinsame Drehachse aufweisen.

9. Verfahren zur Herstellung eines Kodierers nach Anspruch 8, **dadurch gekennzeichnet, dass** die Bahnen (7, 8) gleichzeitig magnetisiert werden.

## Claims

1. A system for determining a torque applied between two members rotating about a geometric axis of rotation (R), said system comprising:

   - a test body having an internal bushing (1) secured in rotation with means for mounting said test body on one member, and an external bushing (2) extending around the internal bushing (1) while having means for mounting said test body on the other member, said bushings being connected by a deformable structure which is arranged to transmit the torque between the members while enabling an angular displacement between said bushings according to the torque applied between the members,
   - an encoder made by equipping each of said bushings with a ring (5, 6) respectively carrying an internal (7) and external (8) magnetic track which is able to emit a periodic signal representative of the rotational movement of the corresponding bushing (1, 2), each of said tracks having a succession of pairs of North and South poles (9) respectively with a polar width $Lp_i$ and $Lp_e$ to form a multipolar magnetic track (7, 8);
   - a sensor comprising a first (20) - respectively a second (21) - pattern of sensitive elements disposed at a reading distance $e_i$ - respectively $e_e$ - from the internal track (7) - respectively from the external track (8) - to form a signal representative of the angular position of the corresponding ring (5, 6);
   - a device for comparing the signals delivered by the sensor, said device being able to determine an angle between the bushings (1, 2) which depends on the applied torque,

   said system being **characterised in that** the tracks (7, 8) have an identical number of pairs of poles (9) which are radially aligned, the reading distances $e_e$ and $e_i$ between the patterns (20, 21) of sensitive elements and the tracks (7, 8) being such that:

   $$\frac{e_e}{Lp_e} = \frac{e_i}{Lp_i}.$$

2. The determination system according to claim 1, **characterised in that** the sensors deliver incremental square signals in quadrature phase, the comparison device comprising counting means indicating the angular position of each of the rings (5, 6) and subtraction means allowing calculating the difference between said angular positions.

3. The determination system according to claim 2, **characterised in that** the sensor comprises means for applying an interpolation factor $f_i$ and $f_e$ to the signal delivered respectively by the first (20) and second (21) pattern of sensitive elements, the counting means measuring a number of fronts $n_i$ and $n_e$ in each of said interpolated signals, the subtraction means performing the operation $f_e.n_i - n_e.f_i$ to calculate the difference between the angular positions of the rings (5, 6).

4. The determination system according to any one of claims 1 to 3, **characterised in that** the reading distances $e_e$ and $e_i$ are respectively equal to $Lp_e/2$ and $Lp_i/2$ +/-10%.

5. The determination system according to any one of claims 1 to 4, **characterised in that** the sensor comprises a board (23) over which the patterns (20, 21) of sensitive elements are embedded in an electronic circuit, each of said patterns projecting radially from said board over a distance $d_i$ for the first pattern (20) and $d_e$ for the second pattern (21).

6. The determination system according to any one of claims 1 to 5, **characterised in that** the rings (5, 6) are fastened on the bushings (1, 2) so that their tracks (7, 8) are respectively disposed in a plane $L_i$ and $L_e$ which are spaced apart radially by a distance l.

7. The determination system according to any one of claims 1 to 6, **characterised in that** the deformable structure comprises at least one radial arm (4) which connects the bushings (1, 2).

8. A method for making an encoder for a system for determining a torque applied between two members rotating about a geometric axis of rotation (R) according to any one of claims 1 to 7, **characterised in that** it provides for:

   - fastening the rings (5, 6) on the bushings (1, 2) of a test body having an internal bushing (1) secured in rotation with means for mounting said test body on one member, and an external bushing (2) extending around the internal bushing (1) while having means for mounting said test body on the other member, said bushings being connected by a deformable structure which is arranged to transmit the torque between the members while enabling an angular displacement between said bushings according to the torque applied between the members; then
- magnetising each of the magnetic tracks (7, 8) concentrically so that they have a common axis of revolution.

9. The method for making an encoder according to claim 8, **characterised in that** the tracks (7, 8) are magnetised simultaneously.

Fig. 1

Fig. 2

Fig. 2a

Fig. 2b

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2821931
- FR 2851651 B1, SKF AB
- FR 2930637 A1, SNR ROULEMENTS SA [FR]; NTN TOYO BEARING CO LTD [JP]
- FR 2792403
- EP 2602593 A
- EP 2602594 A